# EUROPEAN PATENT APPLICATION

(11) **EP 4 160 500 A1**
(43) Date of publication of application: **05.04.2023**
(21) Application number: 21200145.7
(22) Date of filing: 30.09.2021
(51) Int. Cl.: G06Q 20/20, G06F 13/10, G07G 1/12

(54) **PEER TO PEER EPOS SYSTEM**

(71) Applicant: Heineken Supply Chain B.V., 1017 ZD Amsterdam (NL)
(72) Inventor: CUTHBERTSON, Nicholas Jack, 1017 ZD Amsterdam (NL); GLOVER, Heinrich Karel, 1017 ZD Amsterdam (NL); HERMER, Jarrod, 1017 ZD Amsterdam (NL)
(74) Representative: V.O.

(57) **Abstract**

Multiple devices in an ePOS system, including printers, ordering devices and tils, communicate data on address and functionality to one another over a network. In this way, devices are aware of one another's presence and functionality. This allows a first device receiving external instructions to select a second device for executing instructions. Furthermore, with repeated transmissions of data, the network data may be updated, allowing for dynamic and redundant functionality. The device data may be listed and/or sorted by one or more device in accordance with one or more pre-defined criteria. Within the list, a master may be selected in accordance with one or more pre-defined further criteria. With the criteria being the same for all devices, all will select the same master device. The master device may act as a central point for receiving and sending data to external devices.

## Description

### TECHNICAL FIELD

The various aspects and variations thereof relate to networked electronic point of sale system.

### BACKGROUND

Electronic point of sales systems are generally cumbersome to install, in particular wireless systems. Second, in some of such system, clients all communicate with a remote server, using cellular networks. This introduces latency and may result in high costs.

### SUMMARY

It is preferred to provide a networked system and nodes for such system that may provide for an electronic point of sale system that is more convenient to configure.

A first aspect provides a method of operating a first electronic node device in a local data network in an outlet space for selling at least one of goods and services. The method comprises looking up, in a memory connected to the first electronic node device, network authentication data, connecting to a network identified by the network authentication data, using the network authentication data and transmitting, over the network, first node data, the first node data comprising a first node identifier identifying the first electronic node device and first function data identifying a first functionality of the first electronic node device. The method further comprises receiving second node data of at least one second electronic node device, the second node data comprising a second node identifier identifying the second electronic node device and second function data identifying a functionality of the second electronic node device, receiving instruction data by means of a user interface connected to the first electronic node device, determining, based on the instruction data, action data for an action to be executed and sending the action data to the second electronic node.

This method allows for automated configuration of a network of devices of, for example, an electronic point of sale system, enabling operation of the system without complex configuration of the system or central control of the system. An advantage of the first point is that the system is user friendly and convenient to set up, without the need of an ICT-expert, either remotely or on site. An advantage of not requiring a central control of the system makes the system robust and, optionally, simple to expand. In this way, the system may work as a peer-to-peer network.

A variation of the first aspect further comprises listing at least part of the first node data and at least part of the second node data in a list; selecting, based on a pre-determined criterion, a first of the first electronic node device and the second electronic node device as a master device; and communicating, if the first electronic node device is selected as the master device, to a data server, remote master data indicating the first electronic node device has been selected as the master device. Whereas a peer-to-peer network may operates without a master device, it is in certain scenarios preferred to have a master device available. For example, for communication with remote processing centres, communication of only one device of the network with the remote data server may be preferred.

Another variation further comprises sending, if the first electronic node device is selected as the master device, to the second electronic node device, local network master data indicating the first electronic node device has been selected as the master device. With devices in the network being aware of the local master device, devices may employ this in their operation. By using a pre-determined criterion, all devices use the same criterion on the same data, yielding the same outcome for the selected master for all devices.

A further variation further comprises sending, if the second electronic node device is selected as the master device, to the second electronic node device, local network master data indicating the second electronic node device has been selected as the master device. If the device itself is not master, it may be advantageous that the master device is aware that it is acknowledged as the master. This confirms findings of the second device and confirms that data on which device is the master is consistent among multiple devices in the system.

Again another variation further comprises, if the second electronic node device is selected as the master device and if connection with the second device is lost, selecting a further master device based on the list. This variation provides redundancy and fast recovery in the system.

Again a further variation further comprises receiving, if the first electronic node device is selected as the master device, from the data server, data related to the goods and services. This variation may reduce total data traffic between the system and the data server, if data received by the first device is forwarded to other devices in the system.

Yet another variation further comprises obtaining network address space data; transmitting the first node data to a multitude of addresses defined by the network address space data. By transmitting data to multiple addresses, so by broadcasting the data, preferably all devices in the network of the system are made aware of the existence of the first node.

Yet a further implementation further comprises identifying, based on the action data, action function data matching the action data; and sending the action data to the second electronic node device if the action function data matches the second function data. This variation provides an instant auto configuration functionality and instant identification of a device to execute the relevant function. This allows for a dynamic and automated configuration of the network, rather than relying on hard coded or hard wired pre-defined devices to execute a particular function. This increases flexibility, for example in adding, reconfiguring or removing devices.

A second aspect provides a method of operating a first electronic node device in a local data network in an outlet space for selling at least one of goods and services. The method comprises looking up, in a memory connected to the first electronic node device, network authentication data, connecting to a network identified by the network authentication data, using the network authentication data and transmitting, over the network, first node data, the first node data comprising a first node identifier identifying the first electronic node device and first function data identifying a first functionality of the first electronic node device. The method further comprises receiving second node data of at least one second electronic node device, the second node data comprising a second node identifier identifying the second electronic node device and second function data identifying a functionality of the second electronic node device, receiving action data from a second electronic node device, obtaining, from the action data, a function to be executed and executing the function. This second aspect is the reciprocal of the first aspect. Hence, the various variations of the first aspect may apply to the second aspect as well.

A third aspect provides a first electronic node device arranged to operate in a local data network in an outlet space for selling at least one of goods and services. The device comprises a memory connector arranged to communicate with a memory and to look up, the memory, network authentication data and a network adapter. The network adapter may be arranged to connect to a network identified by the network authentication data, using the network authentication data, transmit, over the network, first node data, the first node data comprising a first node identifier identifying the first electronic node device and first function data identifying a first functionality of the first electronic node device and receive second node data of at least one second electronic node device, the second node data comprising a second node identifier identifying the second electronic node device and second function data identifying a functionality of the second electronic node device. The device further comprises a user interface arranged to receive instruction data by means of a user interface connected to the first electronic node device and a processing unit arranged to determine, based on the instruction data, action data for an action to be executed; in this device, the network adapter is further arranged to sending the action data to the second electronic node.

A fourth aspect provides a first electronic node device arranged to operate in a local data network in an outlet space for selling at least one of goods and services. The device may comprise a memory connector arranged to communicate with a memory and to look up, the memory, network authentication data and a network adapter. The network adapter may be arranged to connect to a network identified by the network authentication data, using the network authentication data, transmit, over the network, first node data, the first node data comprising a first node identifier identifying the first electronic node device and first function data identifying a first functionality of the first electronic node device, receive second node data of at least one second electronic node device, the second node data comprising a second node identifier identifying the second electronic node device and second function data identifying a functionality of the second electronic node device and receiving action data from a second electronic node device. The device may further comprise a processing unit arranged to obtain, from the action data, a function to be executed and executing the function.

A fifth aspect provides a computer program product arranged to execute at least one of the method according to the first aspect or the second aspect.

### BRIEF DESCRIPTION OF THE DRAWINGS

The various aspects and variations thereof will now be elucidated in further detail in conjunction with drawings. In the drawings:
- Figure 1:: shows an example of a networked point of sale system;
- Figure 2 A:: shows an example of a counter till device;
- Figure 2 B:: shows an example of a printer device; and
- Figure 3:: shows a flowchart.

### DETAILED DESCRIPTION

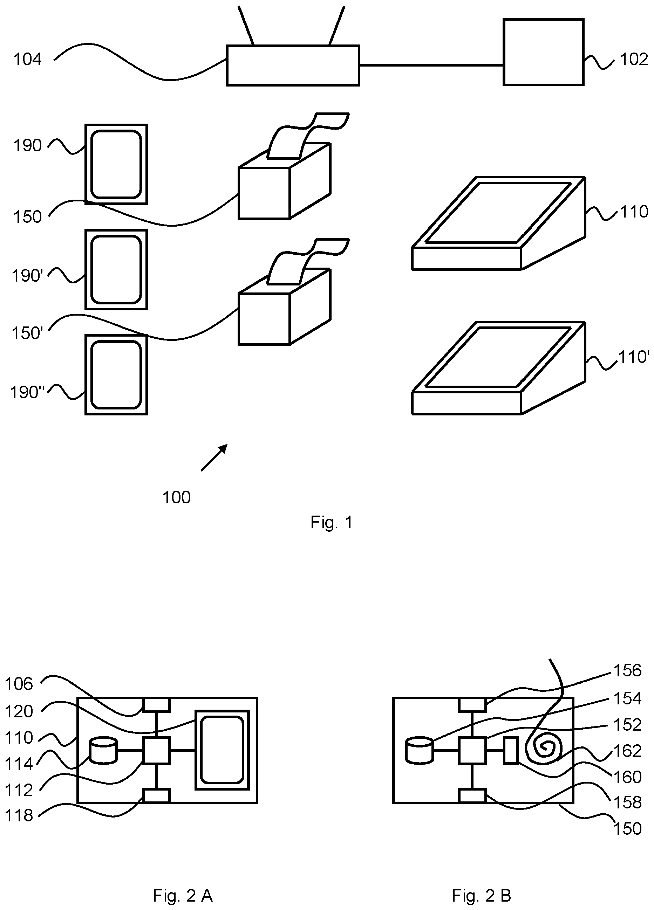

Figure 1 shows an electronic till system 100, also known as an electronic point of sale system, abbreviated as an ePoS or an ePOS system. The ePOS system 100 may located in a retail environment where goods and/or services are being sold. In an exemplary implementation discussed below, the ePOS system 100 may be located in a restaurant. The ePOS system 100 comprises a first counter till 110 and a second counter till 110'. In this example, the first counter till 110 and a second counter till 110' are generally identical, but they may be different in other implementations.

The ePOS sytem 100 further comprises a first portable waiter device 190, a second portable waiter device 190' and a third portable waiter device 190". The first portable waiter device 190, the second portable waiter device 190' and the third portable waiter device 190" may be identical or different. The portable waiter devices are arranged to be carried by waiters or other personnel serving clients or customers of the retail environment. The serving may comprise taking in orders and entering data about the orders in the portable waiter device by means of keys, a touch screen, other input modules or a combination thereof.

The ePOS system 100 further comprises a first printer 150 and a second printer 150'. The first printer 150 and the second printer 150' may be generally the same or different, depending on required functionality. In the implementation discussed below, the first printer 150 and the second printer 150' are generally the same. The first printer 150 and the second printer 150' may be used to print receipts, payment confirmations, order instructions for a kitchen based on an order entered into the first portable waiter device 190 by a waiter, for other objectives, or a combination thereof.

The various parts of the ePOS system 100 discussed above are arranged to communicate with one another via a router 104 that provides a wired network, a wireless network or a hybrid wired and wireless network. In particular in the scenario with the ePOS system 100 comprising portable devices, a hybrid or wireless network may be employed. The router 104 facilitates a network infrastructure over which the various components of the ePOS system 100 are able to communicate directly with one another or directly with a data server 102. The data server 102 may be employed for storing data arranged to be used for configuring the ePOS system 100 or one or more individual components thereof.

The processing units of the various components of the ePOS network 100 may be arranged to execute the various steps of the first aspect and variations thereof, which are further elucidated below. The memory modules of the various components of the ePOS network 100 may be arranged for storing data communicated over the network, data for programming the processing units of the applicable devices to execute the various steps discussed above and below, other data, or any combination thereof.

Figure 2 A shows the first counter till 110 in further detail. The first counter till 110 comprises a till processing unit 112, a till memory module 112, a till wifi communication module 116 as a till local communication module, a till cellular communication module 118 as a global communication module and a till touchscreen 120 as an input/output module, arranged to display data and to receive user input. Alternatively or additionally, keys, knobs and other elements may be used to collect user input. The first portable waiter device 190 and other waiter devices may comprise generally the same components, which may have the same functionality, unless indicated otherwise.

Figure 2 B shows the first printer 150 in further detail. The first printer 190 comprises a printer processing unit 152, a printer memory module 152, a printer wifi communication module 156 as a printer local communication module, a printer cellular communication module 158 as a global communication module. The first printer 150 further comprises a printer head 160 for printing on a paper feed 162. The paper feed 162 may be driven by a paper driver, controlled by the printer processing unit 152.

The wifi communication modules are arranged for exchanging data, via the router 104, with other components of the ePOS system 100 provided locally or with the data server 102, which may be located at the restaurant or at a different location. Alternatively or additionally, other modules may be provided for communicating in accordance with communication protocols other than IEEE 802.11, like Zigbee. The cellular communication module 118 may be arranged to communicate in accordance with cellular communication protocols. Alternatively or additionally, other long-range communication protocols like LoRa may be used. Alternatively, the printers have a wired network connection.

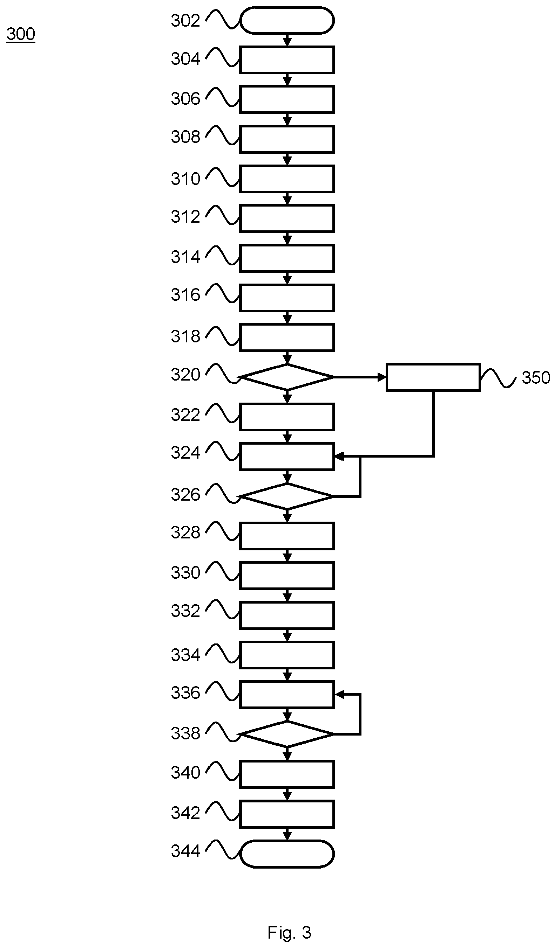

The functionality of the first counter till 110 and the first printer 150 will be discussed below in greater detail in conjunction with a flowchart 300 as depicted by figure 3. The various parts of the flowchart 300 are briefly summarised below. Unless indicated otherwise, parts of the flowchart may be executed by the first counter till 110 as well as by the first printer 150 and other components of the ePOS system 100.
- 302: start procedure
- 304: wake up device
- 306: connect to memory
- 308: look up network data
- 310: connect to network
- 312: determine address range
- 314: broadcast device data
- 316: receive device data
- 318: list devices
- 320: at master location?
- 322: broadcast as master
- 324: wait for input
- 326: input received?
- 328: generate action data
- 330: determine function for action
- 332: identify device for action
- 334: send action data to action device
- 336: wait for action data
- 338: action data received?
- 340: determine action
- 342: execute action
- 344: end of procedure
- 350: broadcast top as master

The procedure starts in terminator 302 and continues to step 304 in which the applicable device wakes up in the environment in which it is employed or is to be employed. In step 306, the applicable device and the processing unit in particular - either the till processing unit 112 or the printer processing unit 152 - connects to a memory. Such memory may be the till memory module 114, the printer memory module 154, but it may also be an external memory.

An external memory may be connected to the first counter till 110 or the first printer 150 by means of a USB connection, an NFC connection, other wired or wireless connections or a combination thereof. Additionally or alternatively, an external memory may provide key data to the applicable processing unit of the applicable device, enabling the processing unit to unlock authentication data stored in the applicable memory module of the applicable device.

In step 308, network data is looked up from the memory connected to in step 306. The network data may comprise at least one of a network identifier, a username and a password. Additionally or alternatively, additional or other authentication data may be provided other than a username and password. The router 104 is preferably provided by one and the same supplier and/or manufacturer as the various components of the ePOS network 100 and the memory connected to. In this way, a network identifier of the router 102, for example an SSID - Service Set Identifier - may be pre-programmed in the router 102 and the same SSID may be programmed in the memory, as well as username and password and further or other authentication data.

With the obtained network data and in particular network identifier and the authentication data - and username and/or password in particular -, the first counter till 110 and the first printer 150 connect to the network facilitated by the router 104 in step 310. The connection may be made by means of the till wifi communication module 116 and the printer wifi communication module 156, respectively. The connection may also be provided over a wired connection.

Subsequently, in step 312, the network range of the network provided by the router 104 is obtained. Such network range may be defined by a subnet defined by the router 104. Based on the network range obtained from the router 104, the first counter till 110 and the first printer 150 determine a network range in the same step 312, such as all possible addresses in the ePOS network 100.

Based on the determined address range, device data is broadcasted to all addresses within the address range or at least part thereof in step 314. Alternatively, the device data is only sent to devices connected to the network.

The device data may comprise as least one of device identifier data, device functionality data, device network address data, other, or a combination thereof. The device identifier data may comprise a MAC address, a serial number defined by the supplier or manufacturer, other, or a combination thereof. The device network address data may comprise an IP address, other, or a combination thereof.

The functionality data may comprise data on the functionality of a device, like printing, electronic till functionality, order intake functionality data or a combination thereof. The device data may further comprise data on a location of the device within the restaurant or specific functionality, like the device being a receipt printer or a kitchen order printer. The specific functionality of being a receipt printer or a kitchen order printer may be set by a supplier or manufacturer or by the restaurant keeper. This may be programmed by means of an external memory as discussed above, by means of a hard switch provided on a printer, a user interface on another component of the ePOS network like a counter till, other, or a combination thereof.

In step 316, device data from other devices may be received. Such data may be received as data from individual devices, containing only data related to the sending device. Alternatively or additionally, the received device data may comprise a list of devices of which the sending device has already received device data. Hence, in step 314, also data of device other than the sending devices may be sent, if received earlier by the sending device.

The first printer 150 and the first counter till 110 generate or update in step 318 a list of devices of which device data has been received. The list is ordered by each device in the same way, in accordance with the same criteria. The devices may be ordered by means of device identifier data, device network data, other, or a combination thereof, either ascending, descending, otherwise, or a combination thereof.

Within the list, a master position is pre-defined. The master position may be the first position or the last position, as this is relatively easy to implement. In this example, the pre-defined position is the first position in the list. The list may be sorted in alphabetical, alphanumerical, numerical or another type of order, ascending or descending. The ordering of the list may also be ordered based on application date of a device at the network.

In step 320, the applicable device - the first counter till 110 and the first printer 150 - determine whether they are on top of the list. If this is the case, they broadcast, at least to all devices in the list and optionally to all addresses in the network as determined above, that the applicable device is master, in step 322. If the applicable device is not on top of the list, the applicable device broadcasts data over the network that the device on top of the list is the master device, in step 350.

The acquisition of device data, the listing of devices and the assigning of the master may be executed at regular intervals. Such interval may range from several minutes to several hours. Additionally or alternatively, if a device is to communicate data externally or internally via the elected master and the elected master does not respond, device data of available responding device is listed again and a new master is selected in accordance with the steps discussed above.

In one implementation, only wired nodes in the network, which would in any case not be the portable waiter devices, are eligible as a master. The master device is in this procedure assigned to communicate at least one of configuration data and update data with the server 102. Configuration data relates to at least one of goods and services that are being sold at the restaurant, including, but not limited to amounts of goods and items sold, items available for sale, orders for stock replenishment, selling prices, either fixed or recommended, discounts and, optionally, timeframes during which the discounts may be applicable, other, or a combination thereof. Such configuration data may be received from as well as sent to the server 102.

The master may communicate with the server 102 via the router 104 or by means of the cellular communication module 118 - or another long range communication module. Update data may relate to when firmware of the devices in the ePOS network 100 has been updated, actual firmware for updating, instructions for updating, other, or a combination thereof.

The master may be arranged to receive the configuration data and/or the update data for all devices in the ePOS network 100. In another implementation, the master only receives the configuration data and the update data is received by each individual device, either via the cellular communication module or via the router 104 and the applicable wifi communication module - or another local network interface, either wired or wireless.

Once the master has been defined and acknowledged within the ePOS network 100, the devices as nodes in the ePOS network 100 enter a waiting state in step 324. In step 326, each device with a user input module checks whether user input is received. With the devices depicted by Figure 1, this would be the portable waiter devices and the counter tills. Below, steps will be discussed in conjunction with the first counter till 110 of Figure 2A.

In step 328, the till processing unit 112 generates action data, based on input received by means of the touchscreen 120. The input may, for example, be to print a receipt following a payment of goods and/or services. Hence, action data generated, based on the input, relates to printing in general and printing of a receipt in particular. In step 330, based on the action data, a printing function is determined to be relevant for the action data.

Based on the determined function, in step 332, the applicable device for the function and for the action is identified. In this example, this is a printer close to the counter and preferably close to the first counter till 110. Hence, a printer in a kitchen for printing orders would not apply in most cases. Based on at least one of the determined function and the determined action, in this example, the first printer 190 (Figure 2 B) is selected for the printing action. The selection of the applicable device may be based on data received in step 316, optionally the list as compiled in step 318. Subsequently, the sending device sends the action data to the applicable device in step 334.

After sending of the data, the procedure may proceed to step 336 as a waiting state for one or more of the devices in the ePOS network, in particular for the first counter till 110. In step 338, each device checks whether action data is received. Following the example above, the first printer 150 receives the data sent in step 334. If data is received, the procedure proceeds to step 340, in which the printer processing unit 152 determines the action to executed, based on the action data received by means of at least one of the printer wifi communication module 156 and the printer cellular communication module 158.

In step 342, the printing action is executed, based on the action data received and the action determined. Based on at least one of the determined action and the action data received, the printer processing unit 152 controls the printer head 160 for printing the applicable data received with the action data or comprised by the action data on the paper feed 162. Optionally, the printer processing unit 152 may control a paper feed driver to eject the paper feed from the first printer 150. Subsequently, the procedure may end in terminator 344 or proceed to at least one of the first waiting step 324 or the second waiting step 336.

In summary, the various implementations relate to a system with multiple devices, including printers, ordering devices and tils, communicate data on address and functionality to one another over a network. In this way, devices are aware of one another's presence and functionality. This allows a first device receiving external instructions to select a second device for executing instructions. Furthermore, with repeated transmissions of data, the network data may be updated, allowing for dynamic and redundant functionality. The device data may be listed and/or sorted by one or more device in accordance with one or more pre-defined criteria. Within the list, a master may be selected in accordance with one or more pre-defined further criteria. With the criteria being the same for all devices, all will select the same master device. The master device may act as a central point for receiving and sending data to external devices.

## Claims

1. Method of operating a first electronic node device in a local data network in an outlet space for selling at least one of goods and services, the method comprising:
looking up, in a memory connected to the first electronic node device, network authentication data;
connecting to a network identified by the network authentication data, using the network authentication data;
transmitting, over the network, first node data, the first node data comprising a first node identifier identifying the first electronic node device and first function data identifying a first functionality of the first electronic node device;
receiving second node data of at least one second electronic node device, the second node data comprising a second node identifier identifying the second electronic node device and second function data identifying a functionality of the second electronic node device;
receiving instruction data by means of a user interface connected to the first electronic node device;
determining, based on the instruction data, action data for an action to be executed;
sending the action data to the second electronic node device.

2. Method of claim 1, further comprising:
listing at least part of the first node data and at least part of the second node data in a list;
selecting, based on a pre-determined criterion, a first of the first electronic node device and the second electronic node device as a master device; and
communicating, if the first electronic node device is selected as the master device, to a data server, remote master data indicating the first electronic node device has been selected as the master device.

3. Method according to claim 2, further comprising sending, if the first electronic node device is selected as the master device, to the second electronic node device, local network master data indicating the first electronic node device has been selected as the master device.

4. Method according to claim 2, further comprising sending, if the second electronic node device is selected as the master device, to the second electronic node device, local network master data indicating the second electronic node device has been selected as the master device.

5. Method according to claim 4, further comprising, if the second electronic node device is selected as the master device and if connection with the second device is lost, selecting a further master device based on the list.

6. Method according to claim 2 or claim 3, further comprising receiving, if the first electronic node device is selected as the master device, from the data server, data related to the goods and services.

7. Method according to any of the preceding claims, further comprising:
obtaining network address space data;
transmitting the first node data to a multitude of addresses defined by the network address space data.

8. Method according to any of the preceding claims, wherein the first function data and the second function data comprises at least one of a printing functionality, a display functionality and a payment operation functionality.

9. Method according to any of the preceding claims, wherein the network authentication data comprises at least one of a network identifier, a username and a password.

10. Method according to any of the preceding claims, wherein looking up, in a memory connected to the first electronic node device, network authentication data comprises connecting to the memory by means of a wireless connection.

11. Method according to any of the preceding claims, further comprising:
identifying, based on the action data, action function data matching the action data; and
sending the action data to the second electronic node device if the action function data matches the second function data.

12. Method of operating a first electronic node device in a local data network in an outlet space for selling at least one of goods and services, the method comprising:
looking up, in a memory connected to the first electronic node device, network authentication data;
connecting to a network identified by the network authentication data, using the network authentication data;
transmitting, over the network, first node data, the first node data comprising a first node identifier identifying the first electronic node device and first function data identifying a first functionality of the first electronic node device;
receiving second node data of at least one second electronic node device, the second node data comprising a second node identifier identifying the second electronic node device and second function data identifying a functionality of the second electronic node device;
receiving action data from a second electronic node device;
obtaining, from the action data, a function to be executed; and
executing the function.

13. First electronic node device arranged to operate in a local data network in an outlet space for selling at least one of goods and services, the device comprising:
a memory connector arranged to communicate with a memory and to look up, the memory, network authentication data;
a network adapter arranged to:
connect to a network identified by the network authentication data, using the network authentication data;
transmit, over the network, first node data, the first node data comprising a first node identifier identifying the first electronic node device and first function data identifying a first functionality of the first electronic node device; and
receive second node data of at least one second electronic node device, the second node data comprising a second node identifier identifying the second electronic node device and second function data identifying a functionality of the second electronic node device;
a user interface arranged to receive instruction data by means of a user interface connected to the first electronic node device; and
a processing unit arranged to determine, based on the instruction data, action data for an action to be executed;
wherein the network adapter is further arranged to sending the action data to the second electronic node device.

14. First electronic node device arranged to operate in a local data network in an outlet space for selling at least one of goods and services, the device comprising:
a memory connector arranged to communicate with a memory and to look up, the memory, network authentication data;
a network adapter arranged to:
connect to a network identified by the network authentication data, using the network authentication data;
transmit, over the network, first node data, the first node data comprising a first node identifier identifying the first electronic node device and first function data identifying a first functionality of the first electronic node device;
receive second node data of at least one second electronic node device, the second node data comprising a second node identifier identifying the second electronic node device and second function data identifying a functionality of the second electronic node device; and
receive action data from a second electronic node device;
a processing unit arranged to:
obtain, from the action data, a function to be executed; and
executing the function.

15. Computer program product arranged to programme a computer to execute at least one of the method according to any of the claims 1 to 12.
